# EUROPÄISCHE PATENTSCHRIFT

(11) **EP 0 848 167 B1**
(45) Veröffentlichungstag und Bekanntmachung des Hinweises auf die Patenterteilung: **30.10.2002**
(21) Anmeldenummer: 97121928.2
(22) Anmeldetag: 12.12.1997
(51) Int. Cl.: F16B 2/06, F16D 1/08

(54) **Spannanordnung**
Clamping arrangement
Dispositif de serrage

(30) Priorität: 12.12.1996 DE 19651604
(43) Veröffentlichungstag der Anmeldung: 17.06.1998
(73) Patentinhaber: Zinsser, Paul, 73269 Hochdorf (DE)
(72) Erfinder: Zinsser, Paul, 73269 Hochdorf (DE)
(74) Vertreter: Patentanwälte Rüger, Barthelt & Abel

(56) Entgegenhaltungen:
- DE-A- 4 327 461
- DE-C- 53 465
- GB-A- 293 122
- US-A- 3 368 834

## Beschreibung

Die Erfindung betrifft eine Spannanordung zum Verbinden einer Außenumfangsfläche eines inneren Bauteils mit einer Innenumfangsfläche eines äußeren Bauteils gemäß den Oberbegriffen der Ansprüche 1 bis 3 sowie entsprechende Herstellungsverfahren.

Aus der DE 41 04 217 ist eine Spannanordnung bekannt, die dazu dient, ein eine Bohrung aufweisendes Bauteil, beispielsweise eine Nabe od.dgl., mit einem zylindrischen Teil zu verbinden. Dazu ist eine Art Büchse vorgesehen, die in axialer Richtung teilweise geschlitzt ist und eine Durchgangsbohrung zur Aufnahme des zylindrischen Teils enthält. Die Außenseite der Büchse hat eine von der Zylinderform abweichende Querschnittsgestalt. Der Querschnitt der Außenkontur entspricht etwa einer Archimedes-Spirale und die Bohrung in dem anderen Teil, beispielsweise der Nabe, hat eine zu der Spirale komplementäre, ebenfalls spiralförmige Kontur.

Die Verspannung geschieht in der Weise, dass auf das zylindrische Bauteil die axial geschlitzte Büchse aufgeschoben und diese Anordnung gemeinsam in die Bohrung des anderen Bauteils eingeschoben wird. Durch Verdrehen der Büchse laufen die Spiralflächen aneinander vorbei, wodurch die Büchse zugespannt wird und das zylindrische Bauteil reibschlüssig festhält.

Bei dieser Anordnung hat zwar das zylindrische Bauteil eine sehr einfach herzustellende Außenkontur, jedoch ist die Bohrung in dem äußeren Bauteil sehr kompliziert konfiguriert, was die Herstellung genau maßhaltiger Konturen erschwert. Insbesondere ist es schwierig, sicherzustellen, dass im montierten Zustand die gewünschte Konzentrizität des zylindrischen Bauteils in dem äußeren Bauteil eingehalten wird.

Darüber hinaus hat auch die zwischen den beiden Bauteilen vorhandene Büchse eine verhältnismäßig komplizierte Gestalt.

Eine andere Wellen-Naben-Verbindung ist aus der DE-C-42 09 153 bekannt. Bei dieser Verbindung hat das innere Bauteil keine zylindrische Gestalt mehr, sondern aus einem gedachten Zylinder wachsen insgesamt drei Spiralflächen heraus, die in der Kontur einer logarithmischen Beziehung entsprechen. In dem äußeren Bauteil befindet sich eine Öffnung, die zu der Außenkontur des inneren Bauteils komplementär ist. Durch Verdrehen der beiden Bauteile gegeneinander wird die gewünschte Verspannung erreicht, die in einer Richtung entgegen der Richtung der Spirale formschlüssig und die in axialer Richtung kraftschlüssig ist, wenn es sich bei der Spiralfläche um eine solche handelt, bei der die Erzeugende parallel zu Achse des inneren Bauteils verläuft.

Auch bei dieser Wellen-Naben-Verbindung ist der herstellungstechnische Aufwand zum Erzeugen der logarithmischen Spirale außerordentlich hoch. Erschwert wird die Herstellung durch die Notwendigkeit, dass mehrere Spiralflächen in Umfangsrichtung hintereinander liegen und präzise denselben Ursprung haben müssen.

Weil die Klemmflächen an beiden Bauteilen einstückig angeformt sind, können sich Probleme bei der azimutalen Ausrichtung der Bauteile zueinander ergeben. Je nach dem wie das Passungsspiel ausfällt, lassen sich die Bauteile unterschiedlich weit gegeneinander verdrehen, ehe der gewünschte Klemmeffekt eintritt.

Aus der DE-A-53465 ist eine Nabenbefestigung mittels doppelter und exzentrischer Halbschalenpaare bekannt. Die Halbschalenpaare sind als Welle-Nabe-Verbindung ausgestaltet und dienen dazu, eine Nabe mit zylindrischer Innenfläche mit einer zylindrischen Welle, eine Nabe mit zylindrischer Innenfläche mit einer profilierten Welle oder eine Nabe mit profilierter Innenfläche mit einer zylindrischen Welle zu verbinden. Die Keilspannanordnung umfasst keilförmige Schalenhälften, die exzentrisch zueinander angeordnet sind. Eine Verdrehung der keilförmigen Schalenhälften gegeneinander bewirkt einen Klemmeffekt.

Aus der US-A-3368834 ist eine Spannanordnung gemäß dem Oberbegriff der Anspruchs 1, bzw. 3 bekannt, die mehrere gebogene Keile umfasst. Diese weisen jeweils eine zylindrische Innen- und Außenfläche auf, wodurch sie relativ einfach herzustellen sind. Die Innenfläche und die Außenfläche jedes Keils weisen zueinander eine Exzentrizität auf, so dass bei Verdrehen der Keile der Keilanordnung gegeneinander eine Verklemmung von Welle und Nabe entsteht.

Aus der DE-A-4327461 ist eine Spannanordnung gemäß dem Oberbegriff des Anspruchs 2 bekannt.

Ausgehend hiervon ist es Aufgabe der Erfindung, eine leicht zu handhabende Spannanordnung zum Verbinden eines inneren Bauteils mit einem äußeren Bauteil zu schaffen.

Diese Aufgabe wird mit einer Anordnung mit den Merkmalen der Ansprüche 1, 2 oder 3 bzw. einem Verfahren der Ansprüche 19, 20 oder 21 gelöst.

Nach der Herstellung werden die Klemmbacken gestürzt zueinander angeordnet und erfindungsgemäß über auftrennbare Mittel miteinander verbunden. Hierdurch entsteht ein leicht zu handhabender Ring aus Klemmbacken, der in seiner räumlichen Gestalt der Lage der Klemmbacken und nach dem Einbau entspricht.

Die einfache Herstellung der Klemmbacken wird erreicht, denn sie gehen aus einem exzentrisch gebohrten zylindrischen Teil her, das in wenigstens zwei Stücke aufgeschnitten ist. Hierdurch entstehen zwei segment- oder bananenförmige Klemmbacken mit einem dicken und einem dünnen Ende. Wenigstens eine der Schnitte, längs dem das zylindrische Ausgangsteil durchgetrennt wird, liegt in einer Ebene, die die beiden Krümmungsachsen, nämlich die Krümmungsachse der Bohrung und die Krümmungsachse für die äußere Zylinderfläche, enthält.

In der gleichen Weise wird gegebenenfalls ein zweites Paar Klemmbacken erzeugt, wobei die Bohrung in dem Ausgangsteil wiederum exzentrisch zu der Außenumfangsfläche liegt. Der Durchmesser der Außenumfangsfläche entspricht dem Durchmesser der Bohrung im äußeren Bauteil, während der Durchmesser der Bohrung gleich dem Außendurchmesser des zuvor genannten ersten Ausgangsbauteils ist. Dieses zweite Ausgangsbauteil wird in der gleichen Weise durchgeteilt, wodurch wiederum zwei Klemmbacken und gegebenenfalls Abfallstücke entstehen. Durch wechselweises Umklappen der Klemmbacken wird eine Klemmbackenkonfiguration erhalten, die außen eine zylindrische Gestalt hat und die innerhalb des inneren Paars von Klemmbacken ebenfalls eine zylindrische Bohrung enthält. Die Trennflächen zwischen jeweils aneinander anliegenden Klemmbacken dagegen verläuft ähnlich einer Spirale, jedoch ist die Spiralfläche nur scheinbar spiralig, tatsächlich handelt es sich um Kreisbögenabschnitte. Durch relatives Verschieben der inneren Klemmbacken gegenüber den äußeren Klemmbacken in Umfangsrichtung entsteht eine Verspannung zwischen dem äußeren und dem inneren Bauteil.

Da die Ausgangsteile, aus denen die Klemmbacken hergestellt sind, immer nur zylindrische Flächen haben, ist der Fertigungsaufwand sehr gering.

Ein weiterer Vorteil der neuen Verbindungsart ergibt sich, weil zum Verspannen des inneren mit dem äußeren Bauteil zwischen beiden Teilen keine Relativdrehung erforderlich ist. Es genügt, wenn die beiden Ringe aus inneren und äußeren Klemmbacken relativ zueinander verdreht werden oder der eine Ring aus Klemmbacken gegen das Bauteil mit den Klemmflächen verdreht wird. Eine exakte Lage der Klemmflächen an dem betreffenden Bauteil ist nicht erforderlich.

Aufgrund der Herstellung hat jede der Klemmbacken eine in Umfangsrichtung gesehene Länge, die etwas kleiner ist als es einem Zentriwinkel von 180° entspricht. Dadurch werden das innere und das äußere Bauteil über eine verhältnismäßig große Fläche miteinander verbunden.

Je nachdem, wie groß der Versatz der Krümmungsachsen an den Klemmgliedern ist, ergibt sich entweder eine verhältnismäßig geringe Verschiebebewegung der Klemmbacken in Umfangsrichtung gegeneinander, weil die Steigung sehr steil ist und ein kurzer Verschiebeweg bereits eine große Durchmesseränderung bedeutet, oder aber es kann eine sehr viel größere Spannkraft erzeugt werden, wenn die Exzentrizität klein ist. Allerdings durchlaufen die beiden Ringe aus Klemmbacken dann eine größere Relativdrehung gegeneinander.

Ein günstiger Kompromiss wird erreicht, wenn der Abstand der Krümmungsachsen bei den Klemmbacken zwischen 1 % und 20 %, bezogen auf den Krümmungsradius der Außenfläche der inneren Klemmbacke liegt.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 die Verbindung eines Rings mit einer zylindrischen Achse mittels der neuen Spannanordnung unter Verwendung von zwei Paaren von Klemmbacken, in einer perspektivischen Darstellung,
Fig. 2 bis 5 verschiedene Verfahrensschritte bei der Herstellung der Spannbacken für die Spannanordnung nach Fig. 1,
Fig. 6 die Anordnung nach Fig. 1 in einer perspektivischen Explosionsdarstellung,
Fig. 7 die Verbindung eines Rings mit einer zylindrischen Achse mittels eines anderen Ausführungsbeispiels der neuen Spannanordnung unter Verwendung von insgesamt sechs Klemmbacken, in einer Draufsicht,
Fig. 8 und 9 verschieden Verfahrensschritte bei der Herstellung der Spannbacken für eine Spannanordnung nach Fig. 7,
Fig. 10 die Verbindung eines Rings mit einer zylindrischen Achse mittels eines anderen Ausführungsbeispiels der neuen Spannanordnung unter Verwendung von ungleichen inneren und äußeren Klemmbacken, in einer Draufsicht,
Fig. 11 und 12 verschieden Verfahrensschritte bei der Herstellung der Spannbacken für eine Spannanordnung nach Fig. 10,
Fig. 13 die beiden Sätze von Spannbacken für die Anordnung nach Fig.1, jeweils in einer Seitenansicht und einer Stirnansicht, und
Fig. 14 eine weiteres Ausführungsbeispiel, bei dem der äußere Klemmbackensatz mit dem äußeren Bauteil einstückig ist, in einer Draufsicht sowie einer Seitenansicht auf die Klemmbacken.

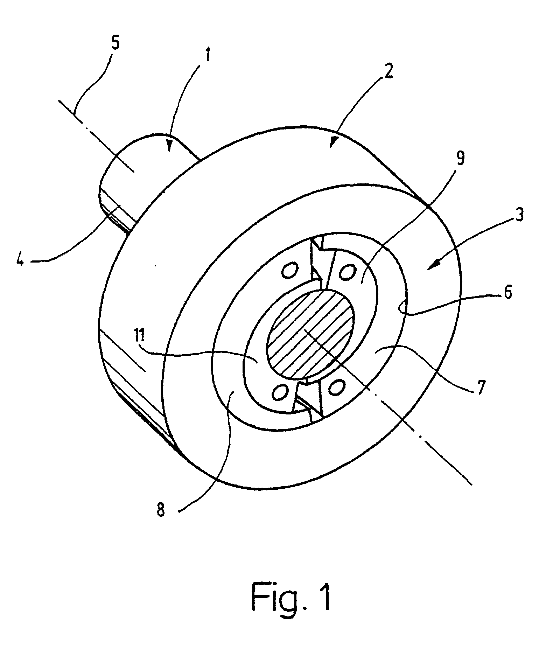

Fig. 1 zeigt ein erstes Ausführungsbeispiel für die Verbindung einer zylindrischen Achse 1 als inneres Bauteil mit einem äußeren Bauteil 2, das in Form eines Rings gezeigt ist. Zur Spannung des inneren und des äußeren Bauteils 1, 2 gegeneinander ist eine Spannanordnung 3 vorgesehen.

Das innere Bauteil 1 weist eine zumindest im Bereich der Spannanordnung 3 zylindrische Außenumfangsfläche 4, deren Krümmungsachse mit einer Achse 5 zusammenfällt.

In dem äußeren Bauteil 2 befindet sich eine zylindrische Bohrung 6, die dementsprechend eine zylindrische Innenumfangsfläche bildet. Deren Krümmungsachse fällt ebenfalls mit der Achse 5 zusammen.

Der Durchmesser der Bohrung 6 ist größer als der Außendurchmesser der zylindrischen Außenumfangsfläche 4, so dass sich zwischen beiden ein Ringspalt ergibt, in dem die Spannanordnung 3 angeordnet ist. Der Ringspalt ist dementsprechend ein zylindrischer Ringspalt.

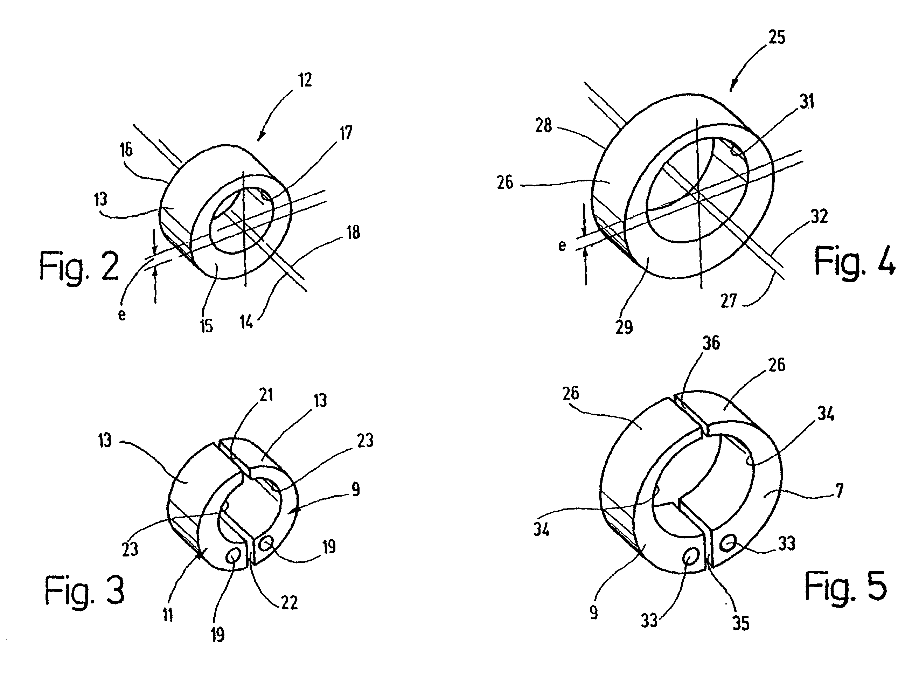

Zu der Spannanordnung 3 gehören insgesamt zwei Paare von Spannbacken 7, 9 und 8, 11. Von diesen sind die beiden Spannbacken 7, 8 die radial außenliegenden oder äußeren Spannbacken, während die anderen beiden Spannbacken 9 und 11 die radial innenliegenden bzw. inneren Spannbacken sind. Sie sind etwa bananenförmig. Die genaue Kontur der inneren und der äußeren Spannbacken 8...11 ergibt sich aus der nachfolgenden Erläuterung der Herstellung anhand der Fig. 2 bis 5.

Zur Herstellung der inneren Spannbacken 9 und 11 wird ein zylindrisches Teil 12 mit einer zylindrischen Außenumfangsfläche 13 bereitgestellt. Die axiale Länge des zylindrischen Teils 12 ist wenigstens so groß wie die axiale Länge der zylindrischen Bohrung 6. Der Außendurchmesser des zylindrischen Teils 12 bzw. der Durchmesser der äußeren Zylinderfläche 13 entspricht etwa dem Mittelwert aus der lichten Weite der Bohrung 6 und dem Außendurchmesser der zylindrischen Außenfläche 4.

Die zu der zylindrischen Außenfläche 13 gehörige Krümmungsachse ist in Fig. 2 mit 14 bezeichnet. In dem zylindrischen Teil 12, das bevorzugt von zwei planen Stirnflächen 15 und 16 begrenzt ist, wird eine zylindrische Bohrung 17 angebracht, deren Krümmungsachse 18 zu der Krümmungsachse 14 parallel gegenüber dieser aber um eine Exzentrizität "e" versetzt ist. Der Durchmesser der Bohrung 17 entspricht dem Durchmesser der zylindrischen Außenfläche 4. Vorzugsweise ergeben beide Teile zusammen einen Schiebesitz nach Passung ISO H7/f7. Nach dem Anbringen der Bohrung 17 hat das Teil 12 die gezeigte ringförmige Gestalt.

Nachdem das Teil 12, wie in Fig. 2 gezeigt, bearbeitet ist, werden beidseits einer Ebene, die durch die beiden Krümmungsachsen 14 und 18 definiert ist, zwei Bohrungen 19 beidseits dieser Ebene eingebracht. Der Durchmesser der Bohrung 19 ist so gewählt, dass sie umfangsseitig vollständig geschlossen sind. Sodann wird das Teil 12, das die Form eines Rings hat, zwischen den beiden Bohrungen 19 durchgeschnitten, und zwar längs der Ebene, die durch die beiden Achsen 14, 18 definiert ist. Nach der Ausführung des Trennschnitts werden die beiden inneren Klemmbacken 9 und 11 erhalten. Diese beiden Klemmbacken 9 und 11 sind zueinander spiegelsymmetrisch und haben, in Umfangsrichtung gesehen, eine Länge, die infolge des Trennschnitts etwas kleiner ist als es einem Zentriwinkel von 180° entspricht. An beiden Enden in Umfangsrichtung wird jede Klemmbacke 9, 11 von einer planen Endfläche 21 bzw. 22 begrenzt. Infolge der Exzentrizität der Bohrung 17 ist die Endfläche 21 schmäler als die Endfläche 22. Beide Endflächen 21 und 22 jeder Klemmbacke 9, 11 verlaufen parallel zu der durch die Achsen 14 und 18 definierten Ebene und im Abstand dazu.

Wie sich aufgrund der Herstellung ergibt, wird jede der beiden inneren Klemmbacken 9, 11 von einer zylindrischen Außenfläche 13 sowie einer zylindrischen Innenfläche 23 begrenzt, die die Wand der ursprünglichen Bohrung 17 ist.

Die beiden äußeren Klemmbacken 7 und 8 werden in sinngemäß der gleichen Weise hergestellt, wie dies die Fig. 4 und 5 zeigen. Bei der Herstellung der Klemmbacken 7 und 8 wird von einem zylindrischen Teil 25 ausgegangen, das eine zylindrische Außenumfangsfläche 26 aufweist, deren Krümmungsachse bei 27 gezeigt ist. Der Außendurchmesser des Teils 25 entspricht dem Durchmesser der Bohrung 6, und zwar so, dass vorzugsweise das Teil 25 in der Bohrung 6 einen Schiebesitz bzw. eine Passung nach ISO K7/f7 ergeben würde. In axialer Richtung ist das Teil 25 von zwei zueinander parallelen Stirnflächen 28 und 29 begrenzt. Die axiale Länge des Teils 25 entspricht der Tiefe der Bohrung 6. Das so bereitgestellte bzw. bearbeitete Teil 25 wird mit einer zylindrischen Bohrung 31 versehen, deren Krümmungsachse bei 32 gezeigt ist. Die Bohrung 31 ist so ausgeführt, dass die Krümmungsachse 32 parallel zu der Krümmungsachse 27 verläuft, und zwar mit einem seitlichen Versatz "e", der gleich dem Versatz der Krümmungsachsen 14 und 18 des Teils 12 gegeneinander ist. Der Durchmesser der Bohrung 29 entspricht dem Außendurchmesser des Teils 12, wobei auch hier wiederum vorteilhafterweise eine Schiebepassung bzw. eine Passung nach ISO H7/f7 zugrundegelegt wird.

Nach dem Ausführen der Bohrung 31 hat das Teil 25 eine ringförmige Gestalt, wobei die Bohrung 31 entsprechend exzentrisch ist.

In demjenigen Teil des erhaltenen Rings, der die größere Wandstärke hat, wird beidseits der durch die beiden Krümmungsachsen 27 und 31 definierten Ebene je eine kleine Durchgangsbohrung 33 angebracht. Anschließend wird das jetzt ringförmige Teil 25 parallel zu der durch die Krümmungsachsen 27 und 32 definierten Ebene durchgeschnitten, wodurch die beiden äußeren Klemmbacken 7 und 8 entstehen. Jede dieser beiden Klemmbacken 7 und 8 wird durch eine zylindrische Außenumfangsfläche 26, eine zylindrische Innenumfangsfläche 34 sowie zwei plane Endflächen 35 und 34 begrenzt.

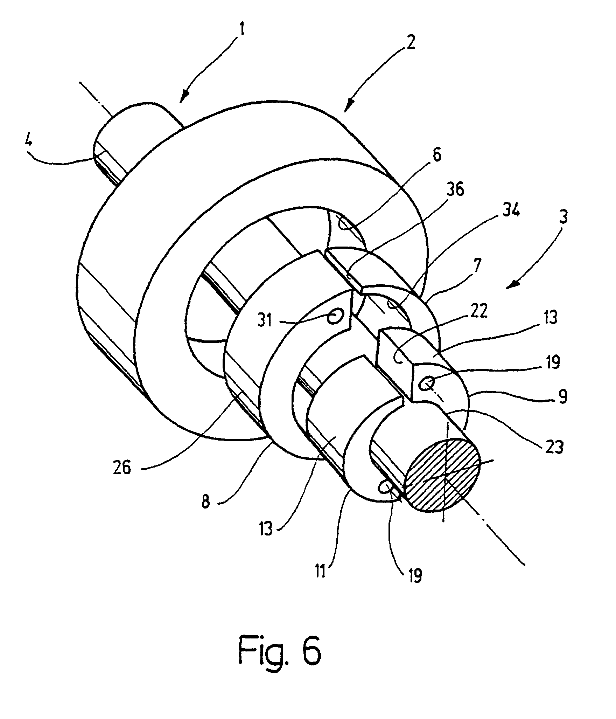

Bei der Montage und Befestigung des inneren Bauteils 1 in der Bohrung 6 des äußeren Bauteils 2 werden die beiden äußeren Klemmbacken 7 und 8, die gemäß Fig. 5 erzeugt sind, um 180° gegeneinander verdreht, bis die Endfläche 35 der einen Klemmbacke der Endfläche 36 der anderen Klemmbacke gegenübersteht und ihre Stirnflächen lagerichtig auftrennbar miteinander verbunden. Der so gebildete geschnittene Ring aus den beiden Klemmbacken 7 und 8 wird in der Bohrung 6 plaziert, wie dies auch die Explosionszeichnung nach Fig. 6 erkennen lässt.

Auch nach dem Umklappen der einen der beiden Klemmbacken 7 und 8 behält der aus den beiden Klemmbacken 7 und 8 gebildete Ring seine gedachte zylindrische Außenumfangsfläche, die lediglich durch den Spalt zwischen den beiden Klemmbacken 7 und 8 unterbrochen ist. Sie passt mit der oben definierten Passung bzw. mit dem oben angegebenen Spiel in die Bohrung 6 hinein.

Als nächstes werden die beiden gemäß Fig. 3 erzeugten Klemmbacken 9 und 11 um 180° gegeneinander verdreht, bis die Endfläche 21 der einen Klemmbacke der Endfläche 22 der anderen Klemmbacke gegenüberliegt. Sodann werden sie so weit gegeneinander verschoben, bis die beiden zylindrischen Innenumfangsflächen 23 eine durchgehende Zylinderfläche bilden, die lediglich durch den Spalt zwischen den beiden Klemmbacken 9 und 11 unterbrochen ist, und die Endflächen lagerichtig auftrennbar miteinander verbunden. Der so gebildete Ring aus den beiden Klemmbacken 9 und 11 hat eine Außenumfangsfläche, die sich aus zwei Zylinderflächenabschnitten zusammensetzt und die an der Übergangsstelle von der einen Klemmbacke zu der anderen Klemmbacke einen Sprung enthält. Die Höhe des Sprungs ist gleich der Breitendifferenz der beiden Endflächen 21 und 22 bzw. gleich demjenigen Flächenbereich an der Endfläche 36 der Klemmbacken 7 und 8, der nicht durch die Endfläche 35 überdeckt ist (entspricht 2e).

Der aus den beiden Klemmbacken 9 und 11 gebildete Ring wird, wie die Fig. 6 zeigt, in die Öffnung zwischen den beiden Klemmbacken 7 und 8 axial eingesteckt. Schließlich wird in die verbleibende Bohrung zwischen den beiden Klemmbacken 9 und 11 das innere Bauteil 1 eingeschoben.

Um die gewünschte Verspannung zu erreichen, wird in die kleine Bohrung 19 einer der inneren Klemmbacken 9 und 11 und die am nächsten benachbarte Bohrung 31 einer der beiden äußeren Klemmbacken 7 und 8 ein Werkzeug eingeführt, das die beiden aus den Paaren von Klemmbacken 7, 8 bzw. 9, 11 gebildeten Ringe in Umfangsrichtung gegeneinander verdreht. Dieses Verdrehen ist in Fig. 1 zu erkennen. Infolge der Verdrehung der Klemmbacken 7...11 gegeneinander vergrößert sich die scheinbare Dicke des Rings aus den jeweils paarweise aufeinander liegenden Klemmbacken 7 und 9 bzw. 8 und 11, wodurch das innere Bauteil 1 in der Bohrung 6 festgeklemmt wird.

Infolge der speziellen Gestalt der Klemmbacken 7...11 bleibt die Achse 5 des inneren Bauteils 1 zu der Achse der Bohrung 6 koaxial. Weil ferner die Klemmbacken paarweise gestürzt zueinander angeordnet sind, kompensieren sich die Exzentrizitäten, weshalb die von den Klemmbacken 9 und 11 definierte Bohrung zu der Außenumfangsfläche der von den Klemmbacken 7 und 8 definierten Zylinderfläche koaxial ist.

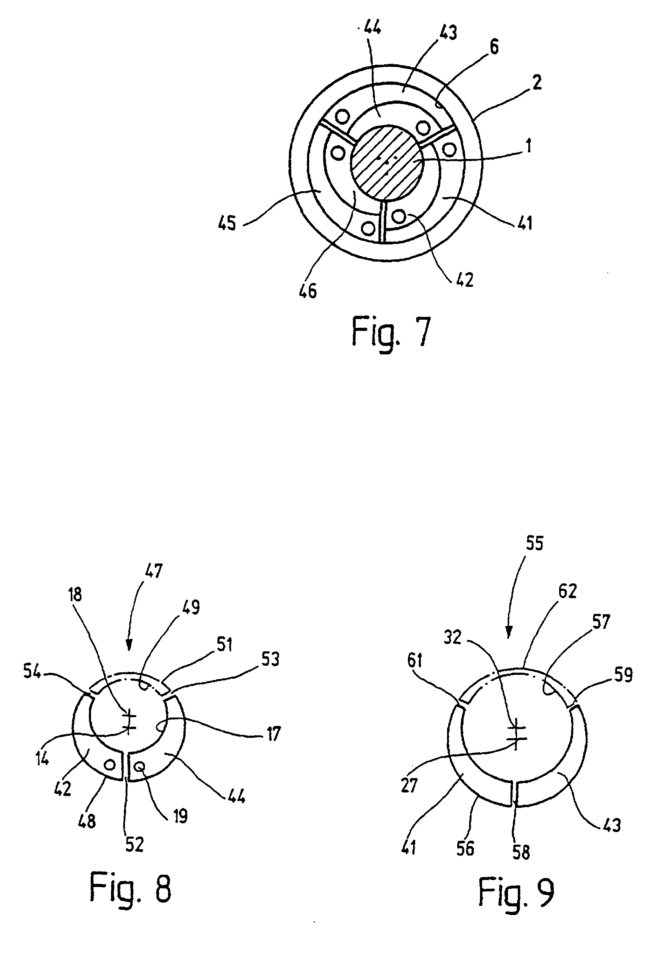

Fig. 7 zeigt ein anderes Ausführungsbeispiel der neuen Spannanordnung. Dieses Ausführungsbeispiel unterscheidet sich von dem Ausführungsbeispiel nach Fig. 1 durch die Verwendung von drei Paaren von Klemmbacken 41, 42; 43, 44 und 45, 46. Sie dienen wiederum dazu, das zylindrische Bauteil 1 in der Bohrung 6 des äußeren Bauteils 2 festzulegen. Diese drei Paare von Klemmbacken 41...46 sind untereinander gleich und längs dem Umfang äquidistant verteilt. Die Herstellung der Klemmbacken 41...46 geschieht, wie dies nachstehend anhand der Fig. 8 und 9 erläutert ist.

Zur Herstellung der inneren Spannbacken 42, 44, 46 wird von einem zylindrischen Teil 47 mit einer zylindrischen Außenfläche 48 ausgegangen. In dem zylindrischen Teil 47 wird eine zylindrische Bohrung 49 entsprechend dem Durchmesser des zylindrischen Bauteils 1 angebracht. Dieses so vorbereitete Teil, das gegebenenfalls noch mit Bohrungen 19 zur Aufnahme eines Betätigungswerkzeuges versehen wird, wird anschließend in drei einzelne Abschnitte aufgeteilt, wodurch zwei innere Klemmbacken, beispielsweise die Klemmbacken 42 und 44, entstehen. Ein drittes, zwischen diesen beiden Klemmbacken 42 und 44 liegendes Teil 51 stellt Abfall dar. Die Aufteilung geschieht in der Weise, dass ein Schnitt 52 ausgeführt wird längs einer Ebene, die durch die beiden Krümmungsachsen 14 und 18 definiert ist. Die beiden Krümmungsachsen 14 und 18 sind in der gleichen Weise festgelegt, wie dies im Zusammenhang mit den Ausführungsbeispielen nach den Fig. 2 und 3 erläutert ist.

Zwei weitere Schnitte 53 und 54 sind so ausgeführt, dass die zylindrische Innenumfangsfläche 17 durch die beiden weiteren Schnitte 53 und 54 zusammen mit dem Schnitt 52 drei gleich lange Abschnitte aufgeteilt ist.

Auf diese Weise werden zwei der erforderlichen drei inneren Klemmbacken erhalten. Durch Bearbeitung eines weiteren Bauteils 47 in der gleichen Weise entsteht schließlich die noch benötigte dritte Klemmbacke.

Die Herstellung der äußeren Klemmbacken erfolgt sinngemäß in der gleichen Weise wie dies Fig. 9 erkennen lässt. Es wird hierbei von einem zylindrischen Bauteil 55 ausgegangen, dessen zylindrische Außenumfangsfläche 56 dem Durchmesser der Bohrung 6 entspricht. In diesem zylindrischen Teil 55 wird eine zylindrische Bohrung 57 angebracht, deren Durchmesser gleich dem Außendurchmesser des Teils 47 ist. Die Bohrung 57 ist gegenüber der Achse 27 um dasselbe Maß versetzt wie bei dem Teil 47 bzw. bei den Klemmbacken nach den Fig. 2 bis 5; es sind deswegen für die Achsen auch dieselben Bezugszeichen verwendet.

Der so vorbereitete Ring mit exzentrischer Bohrung wird durch drei Schnitte 58, 59 und 61 in ähnlicher Weise zerlegt wie der Ring, der aus dem Teil 47 hervorgegangen ist, jedoch mit dem Unterschied, dass die Schnitte 59 und 61 jetzt so liegen, dass dadurch die Außenumfangsfläche 56 in drei gleich lange Stücke, gesehen in Umfangsrichtung, zerlegt ist.

Auch hierbei entsteht wiederum ein Abfallstück 62, während die anderen beiden Abschnitte zwei äußere Klemmbacken, beispielsweise die Klemmbacken 41 und 43, bilden. Die noch erforderliche dritte Klemmbacke 45 wird bei der Bearbeitung eines weiteren zylindrischen Teils 55 erhalten.

Die insgesamt sechs Klemmbacken 41...46 werden, wie Fig. 7 zeigte, paarweise auftrennbar miteinander verbunden und ineinander gesteckt, wodurch sich die Exzentrizitäten gegenseitig kompensieren und eine zylindrische Bohrung entsteht, die das erste Bauteil 1 aufnimmt und die zu der Bohrung 6 konzentrisch ist.

Der Vorteil dieser Anordnung besteht darin, dass an drei Stellen zwischen dem ersten und dem zweiten Bauteil eine Klemmkraft zur Wirkung kommt.

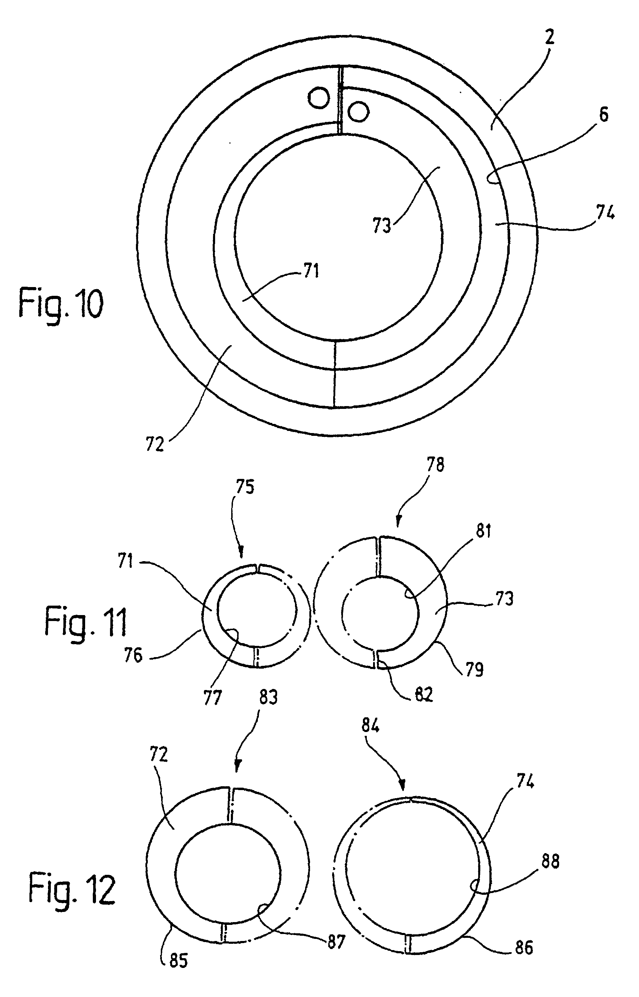

Wie die Fig. 10 bis 12 zeigen, müssen jedoch die Paare von Klemmbacken, die zwischen dem inneren und äußeren Bauteil 1, 2 liegen, nicht, längs dem Umfang der Anordnung gesehen, gleich ausgebildet sein. Wesentlich ist lediglich dieselbe Exzentrizität und die Möglichkeit, die inneren Klemmbacken gegenüber den äußeren Klemmbacken verdrehen zu können.

Fig. 10 zeigt eine solche Anordnung mit einem ersten Paar Klemmbacken 71, 72, die sich von einem zweiten Paar Klemmbacken 73, 74 unterscheiden. Die genaue Geometrie der Klemmbacken 71...74 ergibt sich aus der Art der Herstellung, die nachstehend anhand der Fig. 11 und 12 erläutert ist.

Zur Herstellung der Klemmbacke 71 wird von einem zylindrischen Bauteil 75 mit einer zylindrischen Außenumfangsflächen 76 ausgegangen, das mit einer zylindrischen Bohrung 77 versehen wird. Die Lage der zylindrischen Bohrung 77 ist, wie im Zusammenhang mit dem ersten Ausführungsbeispiel erläutert, exzentrisch positioniert. Der dadurch erhaltene Ring wird längs der Ebene durchgeschnitten, die durch die beiden Krümmungsachsen 14, 18, nämlich der Krümmungsachse 18 für die Bohrung 77 und der Krümmungsachse 14 für die zylindrische Außenfläche 76, festgelegt ist.

Sodann wird ein zweites zylindrisches Bauteil 78 mit einer zylindrischen Außenumfangsfläche 79 genommen und ebenfalls mit einer zylindrischen Bohrung 81 versehen. Die Exzentrizität der Bohrung 81 zu der zylindrischen Außenumfangsfläche 79 ist die gleiche wie bei dem zylindrischen Bauteil 75. Der Durchmesser entspricht dem Außendurchmesser des ersten Bauteils 1. Ausgehend von diesen Randbedingungen ist der Außendurchmesser der zylindrischen Außenumfangsfläche 79 derart gewählt, dass, nachdem das Bauteil 78 längs der Ebene durchgeschnitten ist, die durch die beiden Krümmungsachsen definiert ist, eine Stirnfläche 82 entsteht, die gleiche radiale Stärke hat wie die größere Stirnfläche an dem erhaltenen Klemmbacken 71.

Anschließend werden aus zwei zylindrischen Bauteilen 83 und 84, deren Außenumfangsfläche bzw. 86 einen Durchmesser entsprechend der Bohrung 6 haben, Bohrungen 87 bzw. 88 ausgeführt. Die Exzentrizität der Bohrungen 87 und 88 bezüglich der zylindrischen Außenumfangsflächen 85 und 86 ist gleich der Exzentrizität der Bohrung 77 gegenüber der zylindrischen Außenumfangsfläche 76 bzw. der Bohrung 81 gegenüber der zylindrischen Außenumfangsfläche 79.

Der Durchmesser der Bohrung 87 entspricht dem Außendurchmesser des zylindrischen Teils 75 und der Durchmesser der Bohrung 88 entspricht dem Außendurchmesser des zylindrischen Teils 78.

Die so erhaltenen Ringe werden wiederum längs einer Ebene durchgeschnitten, die von den beiden Krümmungsachsen aufgespannt ist. Hierdurch entsteht aus dem Ring 83 die äußere Klemmbacke 72 und aus dem Ring 84 die äußere Klemmbacke 74. Diese werden paarweise auftrennbar miteinander verbunden und können sodann, wie Fig. 10 zeigt, ineinandergesteckt werden und definieren die zu der Bohrung 6 koaxiale innere Bohrung zur Aufnahme des Bauteils 1. Die Trennfläche zwischen den Klemmbacken der beiden Paare nähert in zwei Abschnitten eine logarithmische Spirale an.

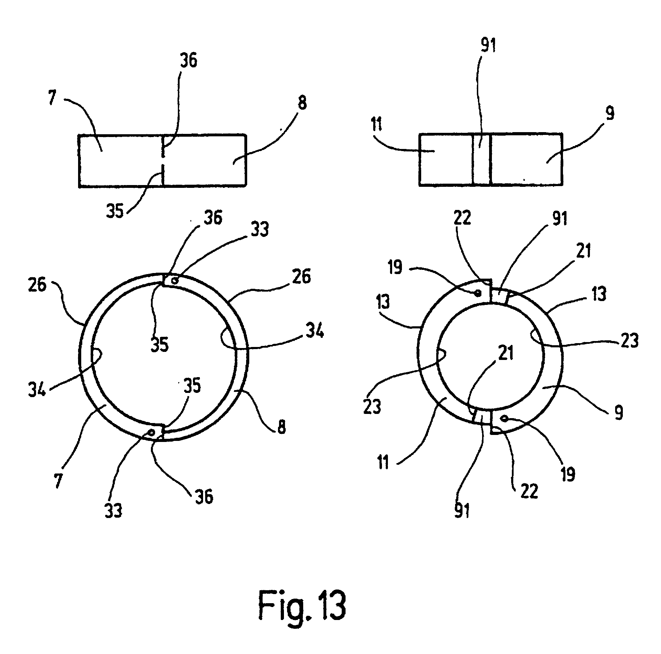

Fig. 13 zeigt ein weiteres Ausführungsbeispiel für die beiden Sätze von Klemmbacken 7, 8 bzw. 9, 11 auf. Die Fig. enthält in der oberen Hälfte eine Seitenansicht und in der unteren Hälfte eine Stirnansicht der Klemmbacken.

Nach der Herstellung, wie dies oben beschrieben ist, werden die beiden äußeren Klemmbacken 7 und 8 gestürzt zueinander angeordnet und an ihren Stirnflächen 35, 36 lagerichtig miteinander verklebt. Hierdurch entsteht ein leicht zu handhabender Ring aus Klemmbacken, der in seiner räumlichen Gestalt der Lage der Klemmbacken 7 und 9 nach dem Einbau entspricht.

Die Verklebung zwischen den Stirnflächen 35, 36 ist dazu eingerichtet beim Spannen auseinander zu reißen.

Bei den inneren Spannbacken 9, 11 sind die Verhältnisse dagegen etwas anders insofern, als durch das Spannen sich diese inneren Klemmbacken 9 und 11 etwas aufeinander zu bewegen. Demzufolge werden sie nach der Herstellung stoffschlüssig durch zwei stauchbare Glieder 91 an den beiden Stirnenden miteinander verbunden. Dieses stauchbaren Glieder 91 sind zwischen den beiden Paaren von Stirnflächen 21 und 22, wie gezeigt, eingefügt.

Die Länge der beiden stauchbaren Glieder 91 ist so bemessen, dass sich der Ring ohne weiteres auf das zylindrische innere Bauteil aufstecken lässt. Auch hierbei ist die räumliche Gestalt des Rings aus Klemmbacken entsprechend der Relativlage der Klemmbacken 9 und 11 im Einbauzustand.

Im Übrigen unterscheidet sich das Ausführungsbeispiel nach Fig. 13 nicht von den Ausführungsbeispielen nach den Fig. 1 bis 7.

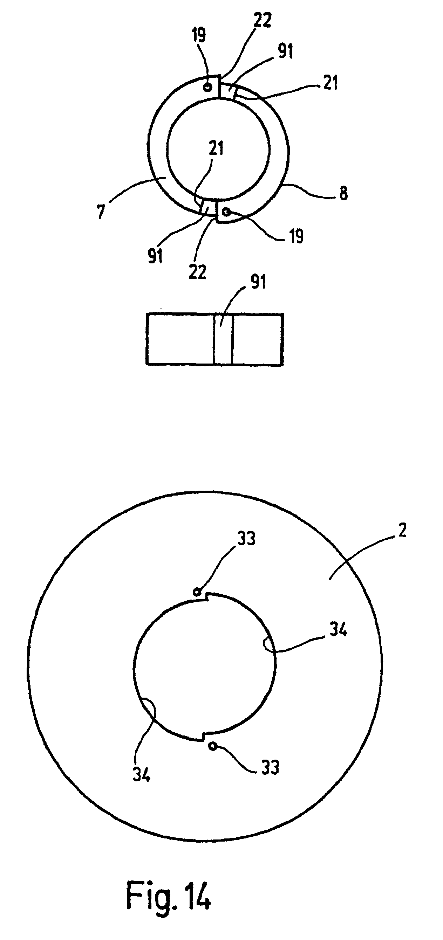

Fig. 14 zeigt ein Ausführungsbeispiel der Erfindung, bei dem gedanklich die äußeren Klemmbacken 7, 8 zum einstückigen Bestandteil des äußeren Bauteils 2 geworden sind. Demzufolge sind an dem äußeren Bauteil 2 lediglich noch die beiden inneren Klemmflächen 34 zu sehen, die in der gleichen Weise dimensioniert sind, wie dies für die Klemmflächen 34 nach dem Ausführungsbeispiel nach den Fig. 1 bis 6 erläutert wurde. Dieses Ausführungsbeispiel eignet sich sehr gut bei Anwendungen, bei denen das äußere Bauteil 2 ein Spritzguss- oder ein Druckgussteil ist, wo es ohne weiteres möglich ist, diese beiden Klemmflächen 34 eng toleriert mit gleichen Abmessungen einzuformen. Das Festspannen auf dem zylindrischen inneren Bauteil geschieht nur noch mit einem Satz von Klemmbacken, und zwar in diesem Falle mit den Klemmbacken, die bei den vorherigen Beispielen als innere Klemmbacken 7, 8 bezeichnet sind.

Diese Klemmbacken 7 und 8 können, wie im Zusammenhang mit den Fig. 2 und 3 erläutert, hergestellt werden, und sie werden anschließend, gegebenenfalls im Zusammenhang mit Fig. 13 beschrieben, miteinander verbunden.

Die Montage geschieht sinngemäß wie bereits beschrieben, wobei der Vorteil erhalten bleibt, dass eine exakte azimutale Ausrichtung des äußeren Bauteils 2 gegenüber dem inneren Bauteil erhalten bleibt bzw. beim Spannen ohne weiteres erreicht werden kann.

Da nach wie vor ein Satz Klemmbacken, in diesem Fall der Satz aus den Klemmbacken 7 und 8, relativ zu einem Bauteil, in diesem Falle zu dem inneren Bauteil, in Umfangsrichtung beweglich ist, kann das äußere Bauteil 2 in jeder beliebigen azimutalen Ausrichtung zu dem inneren Bauteil aufgesteckt werden und durch Verschieben des Rings aus den beiden inneren Klemmbacken 7 und 8 kann in jeder azimutalen Stellung die Verklemmung erreicht werden.

Abweichend von dem gezeigten Ausführungsbeispiel ist es auch möglich, das innere Bauteil mit den einstückig angeformten Klemmflächen zu versehen. Diese einstückig angeformten Klemmflächen würden den äußeren Klemmflächen 13 der inneren Klemmbacken 7, 8 entsprechen. Das äußere Bauteil 2 hätte dann eine glattzylindrische Bohrung und die zum Spannen notwendigen Klemmbacken wären die äußeren Klemmbacken gemäß den Fig. 4 und 5.

Selbstverständlich können bei dem gezeigten Ausführungsbeispiel nicht nur zwei, sondern auch drei oder mehr Klemmbacken jeweils zu einem Ring angeordnet sein, wie dies oben bereits erläutert ist.

## Patentansprüche

1. Spannanordnung (3) zum Verbinden einer Außenumfangsfläche (4) eines inneren Bauteils (1) mit einer Innenumfangsfläche (6) eines äußeren Bauteils (2), wobei wenigstens die Außenumfangsfläche (4) oder die Innenumfangsfläche (6) zylindrisch ausgebildet ist,
mit wenigstens zwei äußeren Klemmbacken (7,8;41,43, 45;72,74), die zusammen etwa die Länge eines vollständigen Rings haben und von denen jedes eine Außenumfangsfläche (26,56,85,86) und eine zylindrische Innenumfangsfläche (34,57,87,88) aufweist, wobei
(i) die Außenumfangsfläche (26,56,85,86) einen Krümmungsradius aufweist, der gleich dem Krümmungsradius der zylindrischen Innenumfangsfläche (6) des äußeren Bauteils (2) ist,
(ii) der Krümmungsradius der Innenumfangsfläche (34,57,87,88) kleiner als der Krümmungsradius der Außenumfangsfläche (26,56,85,86) ist,
(iii) bei jeder äußeren Klemmbacke (7,8;41,43,45;72,74) die Krümmungsachse (32) der Innenumfangsfläche (34,57,87,88) gegenüber der Krümmungsachse (27) der Außenumfangsfläche (26,56,85,86) versetzt ist, und
(iv) der Versatz (e) der beiden Krümmungsachsen (27,32) bei jeder äußeren Klemmbacken (7,8;41,43,45;72, 74) gleich groß ist, und
mit wenigstens zwei inneren Klemmbacken (9,11;42,44,46;71,73) die zusammen etwa die Länge eines vollstständigen Rings haben und von denen jedes eine zylindrische Außenumfangsfläche (13,48,76,79) und eine zylindrische Innenumfangsfläche (23,77,81) aufweist, wobei
(i) die Außenumfangsfläche (13,48,76,79) einen Krümmungsradius aufweist, der gleich dem Krümmungsradius der Innenumfangsfläche (34,57,87,88) einer zugeordneten äußeren Klemmbacke (7,8;41,43,45;72,74) ist,
(ii) die Innenumfangsfläche (23) einen Krümmungsradius aufweist, der gleich dem Krümmungsradius der zylindrischen Außenumfangsfläche (4) des inneren Bauteils (1) ist,
(iii) bei jeder inneren Klemmbacke (9,11:42,44,46; 71,73) die Krümmungsachse (18) der Innenumfangsfläche (23) gegenüber der Krümmungsachse (14) der Außenumfangsfläche (13,48,76,79) versetzt ist und
(iv) der Versatz (e) der Krümmungsachsen (14,18) bei den inneren Klemmbacken (9,11;42,44,46;71,73) gleich dem Versatz (e) der Krümmungsachsen bei den äußeren Klemmbacken (7,8;41,43,45;72,74) ist,
**dadurch gekennzeichnet,**
**dass** die Klemmbacken (7,8;9,11) über auftrennbare Mittel zu einem leicht zu handhabender Ring aus Klemmbacken, der in seiner räumlicher Gestalt der Lage der Klemmbacken und nach dem Einbau entspricht, miteinander verbunden sind.

2. Spannanordnung (3) zum Verbinden einer zylindrischen Außenumfangsfläche (4) eines inneren Bauteils (1) mit einer Innenumfangsfläche (6) eines äußeren Bauteils (2),
mit wenigstens zwei Klemmbacken (7,8;9,11), die zusammen etwa die Länge eines vollständigen Rings haben und von denen jede eine Außenumfangsfläche (13,26) und eine Innenumfangsfläche (17,31) aufweist, wobei
(i) die Außenumfangsfläche (13,26) einen Krümmungsradius aufweist,
(ii) die Innenumfangsfläche (23,34) einen Krümmungsradius aufweist, der gleich dem Krümmungsradius der Außenumfangsfläche (4) des inneren Bauteils (1) ist,
(iii) bei jeder Klemmbacke (7,8;9,11) die Krümmungsachse (18) der Innenumfangsfläche (23,34) gegenüber der Krümmungsachse (14) der Außenumfangsfläche (13,26) versetzt ist und
mit wenigstens zwei inneren Klemmflächen (34) die an der Innenumfangsfläche des äußeren Bauteils (2) ausgebildet sind, wobei
(i) jede Klemmfläche (34) einen Krümmungsradius aufweist, der gleich dem Krümmungsradius der Außenumfangsfläche (13,26) der zugeordneten Klemmbacke (7,8;9,11) ist,
(ii) bei jeder Klemmfläche (34) die Krümmungsachse (18) gegenüber der Krümmungsachse (14) der anderen Klemmfläche (34) versetzt ist und
(iii) der Versatz (e) der Krümmungsachsen (14,18) bei den Klemmflächen (34) gleich dem Versatz (e) der Krümmungsachsen bei den Klemmbacken (7,8;9,11) ist,
**dadurch gekennzeichnet, dass** die Außen- (13, 26) und Innenumfangsflächen (17, 31) Zylindrisch sind und
dass die Klemmbacken (7,8;9,11) über auftrennbare Mittel zu einem leicht zu handhabender Ring aus Klemmbacken, der in seiner räumlicher Gestalt der Lage der Klemmbacken und nach dem Einbau entspricht, miteinander verbunden sind.

3. Spannanordnung (3) zum Verbinden einer Außenumfangsfläche (4) eines inneren Bauteils (1) mit einer zylindrischen Innenumfangsfläche (6) eines äußeren Bauteils (2),
mit wenigstens zwei Klemmbacken (7,8;9,11), die zusammen etwa die Länge eines vollständigen Rings haben und von denen jede eine zylindrische Außenumfangsfläche (13,26) und eine zylindrische Innenumfangsfläche (23,34) aufweist, wobei
(i) die Außenumfangsfläche (13,26) einen Krümmungsradius aufweist, der gleich dem Krümmungsradius der zylindrischen Innenumfangsfläche (4) des äußeren Bauteils (1) ist,
(ii) die Innenumfangsfläche (23,34) einen Krümmungsradius aufweist,
(iii) bei jeder Klemmbacke (7,8;9,11) die Krümmungsachse (18) der Innenumfangsfläche (23,34) gegenüber der Krümmungsachse (14) der Außenumfangsfläche (13,26) versetzt ist,
**dadurch gekennzeichnet, dass**
wenigstens zwei äußeren Klemmflächen an der Außenumfangsfläche des inneren Bauteils (1) ausgebildet sind, wobei
(i) jede Klemmfläche einen Krümmungsradius aufweist, der gleich dem Krümmungsradius der Innenumfangsfläche (23,34) der zugeordneten Klemmbacke (7,8;9,11) ist,
(ii) bei jeder Klemmfläche die Krümmungsachse (18) gegenüber der Krümmungsachse (14) der anderen Klemmfläche versetzt ist und
(iii) der Versatz (e) der Krümmungsachsen (14,18) bei den Klemmflächen gleich dem Versatz (e) der Krümmungsachsen bei den Klemmbacken (7,8;9,11) ist,
und wobei
die Klemmbacken (7,8;9,11) über auftrennbare Mittel zu einem leicht zu handhabender Ring aus Klemmbacken, der in seiner räumlicher Gestalt der Lage der Klemmbacken und nach dem Einbau entspricht, miteinander verbunden sind.

4. Spannanordnung nach Anspruch 1, **dadurch gekennzeichnet, dass** lediglich genau zwei äußere Klemmbacken (7,8;72,74) und lediglich genau zwei innere Klemmbacken (9,11;71,73) vorgesehen sind.

5. Spannanordnung nach Anspruch 2 oder 3, **dadurch gekennzeichnet, dass** lediglich genau zwei Klemmbacken (7,8;72,74) vorgesehen sind und dass die Klemmbacken (7,8;9,11) gleich sind.

6. Spannanordnung nach Anspruch 1, **dadurch gekennzeichnet, dass** die äußeren Klemmbacken (7,8;41,43,45) untereinander gleich sind und dass die inneren Klemmbacken (9,11;42,44,46) untereinander gleich sind.

7. Spannanordnung nach Anspruch 1, **dadurch gekennzeichnet, dass** die äußeren Klemmbacken (72,74) an ihrer Innenumfangsfläche (87,88) unterschiedliche Krümmungsradien aufweisen und dass der Krümmungsradius der Außenumfangsfläche der inneren Klemmbacken (71,73) an den Krümmungsradius der Innenumfangsfläche des jeweils zugehörigen äußeren Klemmbackens (72,74) angepasst ist.

8. Spannanordnung nach Anspruch 1, **dadurch gekennzeichnet, dass** wenigstens einer der äußeren Klemmbacken (7,8;41,43,45;72,74) und wenigstens einer der inneren Klemmbacken (9,11;42,44,46;71,73) Betätigungsmittel (19) zugeordnet sind, um die Klemmbacken (7,8;41,43,45;72,74;9,11;42,44,46;71,73) in Richtung parallel zu den Umfangsflächen gegeneinander zu verschieben.

9. Spannanordnung nach Anspruch 2 oder 3, **dadurch gekennzeichnet, dass** wenigstens einer der Klemmbacken (7,8;41,43,45;72,74) Betätigungsmittel (19) zugeordnet sind, um die Klemmbacken (7,8;41,43,45;72,74;9, 11;42,44,46;71,73) in Richtung parallel zu den Umfangsflächen zu verschieben.

10. Spannanordnung nach Anspruch 8 oder 9, **dadurch gekennzeichnet, dass** die Betätigungsmittel von Öffnungen (19) gebildet sind.

11. Spannanordnung nach Anspruch 1, **dadurch gekennzeichnet, dass** sich die äußere Klemmbacke (7,8;41,43,45;72,74) über einen Zentriwinkel von weniger als 180° erstreckt.

12. Spannanordnung nach Anspruch 1, **dadurch gekennzeichnet, dass** sich die innere Klemmbacke (9,11;42,44,46;71,73) über einen Zentriwinkel von weniger als 180° erstreckt.

13. Spannanordnung nach Anspruch 2 oder 3, **dadurch gekennzeichnet, dass** sich jede Klemmbacke (7,8;9,11;42, 44,46;71,73) über einen Zentriwinkel von weniger als 180° erstreckt.

14. Spannanordnung nach Anspruch 1, 2 oder 3, **dadurch gekennzeichnet, dass** jede Klemmbacke (7,8,9,11;71,72,73, 74), in Umfangsrichtung gesehen, jeweils von einem Stirnende (21,22;35,36) begrenzt ist und die Stirnenden (21, 22;35,36) an jeder Klemmbacke (7,8,9,11;71,72,73,74) in einer gemeinsamen Ebene liegen.

15. Spannanordnung nach Anspruch 14, **dadurch gekennzeichnet, dass** bei jeder Klemmbacke (7,8,9,11;71,72,73,74) die beiden Krümmungsachsen (14,18;27,32) in einer Ebene liegen und dass bei jeder Klemmbacke dasjenige Stirnende (21,22;33,34) mit der größeren Abmessung in dieser Ebene liegt oder dieser Ebene benachbart ist.

16. Spannanordnung nach Anspruch 1, 2 oder 3, **dadurch gekennzeichnet, dass** die Größe des Versatzes (e) bei den Klemmbacken (7,8,9,11;71,72,73,74) zwischen 1 % und 20 %, bezogen auf den Krümmungsradius der Außenumfangsfläche der Klemmbacke bzw. inneren Klemmbacke (9,11;42,44,46;71,73) liegt.

17. Spannanordnung nach Anspruch 1, 2 oder 3, **dadurch gekennzeichnet, dass** die bezüglich der Umfangsrichtung zusammengehörenden Klemmbacken (7,8;9,11) an ihren in Umfangsrichtung zeigenden Stirnflächen (21,22,35,36) derart miteinander verbunden sind, dass sie relativ zueinander eine Lage wie im Einbauzustand einnehmen.

18. Spannanordnung nach Anspruch 1, 2 oder 3, **dadurch gekennzeichnet, dass** die Klemmbacken (7,8;9,11) über kompressible Mittel (91) miteinander verbunden sind.

19. Verfahren zur Herstellung einer Spannanordnung zum Verbinden einer zylindrischen Außenumfangsfläche (4) eines inneren Bauteils (1) mit einer zylindrischen Innenumfangsfläche (6) eines äußeren Bauteils (2), bei dem:
wenigstens ein erstes zylindrisches Glied (25,55, 83,84) mit einer zylindrischen Außenumfangsfläche (26,56,85,86) bereitgestellt wird, deren Durchmesser gleich dem Durchmesser der Innenumfangsfläche (6) des äußeren Bauteils (2) ist,
das wenigstens eine erste zylindrische Glied (25,55,83,84) mit einer zylindrischen Bohrung (31,57,87,88) versehen wird, deren Achse (32) gegenüber der Achse (27) der zylindrischen Außenumfangsfläche (26,56,85,86) um einen festgelegten Abstand versetzt ist,
das wenigsens eine erste zylindrische Glied (25,55, 83,84) zumindest längs einer Ebene geteilt wird, die zu einer Ebene parallel ist, die von den beiden Achsen (27, 32) des ersten zylindrischen Glieds (25,55,83,84) festgelegt ist,
wenigstens ein zweites zylindrisches Glied (12,47, 75,78) mit einer zylindrischen Außenumfangsfläche (13,48,76,79) bereitgestellt wird, deren Durchmesser gleich dem Durchmesser der Bohrung (31,57,87,88) in dem ersten zylindrischen Glied (25,55,83,84) ist,
das wenigstens eine zweite zylindrische Glied (12, 47,75,78) mit einer zylindrischen Bohrung (17) versehen wird, deren Durchmesser gleich dem Durchmesser der Außenumfangsfläche (4) des inneren Bauteils (1) ist und deren Achse (18) gegenüber der Achse (14) der zylindrischen Außenumfangsfläche (13,48,76,79) um einen festgelegten Abstand versetzt ist, wobei der Versatz bei dem ersten zylindrischen Glied (25,55,83,84) gleich dem Versatz an dem zweiten zylindrischen Glied (12,47,75,78) ist, und
das wenigstens eine zweite zylindrische Glied (12, 47,75,78) zumindest längs einer Ebene geteilt wird, die zu einer Ebene parallel ist, die von den beiden Achsen (14,18) des zweiten zylindrischen Glieds (12,47,75,78) festgelegt ist,
wobei die
durch die Teilung der zylindrischen Glieder (25, 55, 83, 84; 12, 47, 75, 78) entstehenden Klemmbacken (7, 8; 9, 11) gestürzt zueinander angeordnet und über auftrennbare Mittel miteinander verbunden werden, wodurch ein leicht zu handhabender Ring aus Klemmbacken entsteht, der in seiner räumlichen Gestalt der Lage der Klemmbacken nach dem Einbau entspricht.

20. Verfahren zur Herstellung einer Spannanordnung zum Verbinden einer zylindrischen Außenumfangsfläche (4) eines inneren Bauteils (1) mit einer Innenumfangsfläche (6) eines äußeren Bauteils (2), bei dem:
wenigstens ein zylindrisches Glied (25,55,83,84) mit einer zylindrischen Außenumfangsfläche (26,56,85,86) bereitgestellt wird,
das wenigstens eine zylindrische Glied (25,55, 83,84) mit einer zylindrischen Bohrung (31,57,87,88) versehen wird, deren Achse (32) gegenüber der Achse (27) der zylindrischen Außenumfangsfläche (26,56,85,86) um einen festgelegten Abstand versetzt ist,
das wenigstens eine zylindrische Glied (25,55, 83,84) zumindest längs einer Ebene geteilt wird, die zu einer Ebene parallel ist, die von den beiden Achsen (27, 32) des zylindrischen Glieds (25,55,83,84) festgelegt ist,
die Innenumfangsfläche des äußeren Bauteils (2) mit wenigstens zwei Klemmflächen (34) versehen wird, deren Krümmungsradius mit dem Krümmungsradius der zylindrischen Außenumfangsfläche (13,26) des zylindrischen Glieds (12,25) übereinstimmt, wobei die Klemmflächen derart ausgerichtet sind, dass ihre Krümmungsachsen um einen festgelegten Abstand gegeneinander versetzt ist, und der Abstand gleich dem Versatz an dem zylindrischen Glied (12,47,75,78) ist,
wobei die
durch die Teilung der zylindrischen Glieder (25, 55, 83, 84) entstehenden Klemmbacken (7, 8) gestürzt zueinander angeordnet und über auftrennbare Mittel miteinander verbunden werden, wodurch ein leicht zu handhabender Ring aus Klemmbacken entsteht, der in seiner räumlichen Gestalt der Lage der Klemmbacken nach dem Einbau entspricht.

21. Verfahren zur Herstellung einer Spannanordnung zum Verbinden einer Außenumfangsfläche (4) eines inneren Bauteils (1) mit einer zylindrischen Innenumfangsfläche (6) eines äußeren Bauteils (2), bei dem:
wenigstens ein zylindrisches Glied (25,55,83,84) mit einer zylindrischen Außenumfangsfläche (26,56,85,86) bereitgestellt wird,
das wenigstens eine zylindrische Glied (25,55, 83,84) mit einer zylindrischen Bohrung (31,57,87,88) versehen wird, deren Achse (32) gegenüber der Achse (27) der zylindrischen Außenumfangsfläche (26,56,85,86) um einen festgelegten Abstand versetzt ist,
das wenigstens eine zylindrische Glied (25,55, 83,84) zumindest längs einer Ebene geteilt wird, die zu einer Ebene parallel ist, die von den beiden Achsen (27, 32) des zylindrischen Glieds (25,55,83,84) festgelegt ist,
die Außenumfangsfläche des inneren Bauteils (1) mit wenigstens zwei Klemmflächen versehen wird, deren Krümmungsradius mit dem Krümmungsradius der zylindrischen Innenumfangsfläche des zylindrischen Glieds (25,55,83,84) übereinstimmt, wobei die Klemmflächen derart ausgerichtet sind, dass ihre Krümmungsachsen um einen festgelegten Abstand gegeneinander versetzt ist, und der Abstand gleich dem Versatz an dem zylindrischen Glied (12,47,75,78) ist,
wobei die
durch die Teilung der zylindrischen Glieder (25, 55, 83, 84) entstehenden Klemmbacken (7, 8) gestürzt zueinander angeordnet und über auftrennbare Mittel miteinander verbunden werden, wodurch ein leicht zu handhabender Ring aus Klemmbacken entsteht, der in seiner räumlichen Gestalt der Lage der Klemmbacken nach dem Einbau entspricht.

22. Verfahren nach Anspruch 19, 20 oder 21, **dadurch gekennzeichnet, dass** das wenigstens eine erste Glied (25,55,83,84) in zumindest drei Stücke aufgeteilt wird, die längs ihres Umfangs gemessen gleichlang sind.

23. Verfahren nach Anspruch 19, **dadurch gekennzeichnet, dass** das wenigstens eine zweite Glied (12,47,75,78) in zumindest drei Stücke aufgeteilt wird, die längs ihres Umfangs gemessen gleichlang sind.

24. Verfahren nach Anspruch 19, 20 oder 21, **dadurch gekennzeichnet, dass** die Größe des Versatzes zwischen 1 % und 20 %, bezogen auf den Krümmungsradius der Außenumfangsfläche des wenigstens einen zweiten Glieds (12,47,75,78) liegt.

25. Verfahren nach Anspruch 19, 20 oder 21, **dadurch gekennzeichnet, dass** wenigstens eines der zylindrischen Glieder (25,55,83,84;12,47,75,78) vorzugsweise beide, aus Metall hergestellt oder aus Kunststoff hergestellt sind.

26. Verfahren nach Anspruch 19, 20 oder 21, **dadurch gekennzeichnet, dass** der Durchmesser der Außenumfangsfläche (26,56,85,86) des ersten zylindrischen Glieds (25,55,83,84) derart bemessen ist, dass das erste zylindrische Glied (25,55,83,84) in dem zweiten Bauteil (2) eine Presspassung, vorzugsweise eine Schiebepassung, ergibt.

27. Verfahren nach Anspruch 19, **dadurch gekennzeichnet, dass** der Durchmesser der Innenumfangsfläche (17) des zweiten zylindrischen Glieds (12,47,75,78) derart bemessen ist, dass das zweite zylindrische Glied (12,47,75,78) auf dem ersten Bauteil (1) eine Presspassung, vorzugsweise eine Schiebepassung, ergibt.

## Claims

1. Clamping arrangement (3) for connecting an outer circumferential surface (4) of an inner component (1) to an inner circumferential surface (6) of an outer component (2), wherein at least the outer circumferential surface (4) or the inner circumferential surface (6) is cylindrical,
with at least two outer gripping jaws (7, 8; 41, 43, 45; 72, 74), which together are approximately of the length of a complete ring and each of which has an outer circumferential surface (26, 56, 85, 86) and a cylindrical inner circumferential surface (34, 57, 87, 88), wherein
(i) the outer circumferential surface (26, 56, 85, 86) has a radius of curvature which is equal to the radius of curvature of the cylindrical inner circumferential surface (6) of the outer component (2),
(ii) the radius of curvature of the inner circumferential surface (34, 57, 87, 88) is smaller than the radius of curvature of the outer circumferential surface (26, 56, 85, 86),
(iii) the axis of curvature (32) of the inner circumferential surface (34, 57, 87, 88) of each outer gripping jaw (7, 8; 41, 43, 45; 72, 74 is staggered with respect to the axis of curvature (27) of the outer circumferential surface (26, 56, 85, 86), and
(iv) the stagger (e) of the two axes of curvature (27, 32) of each outer gripping jaw (7, 8; 41, 43, 45; 72, 74) is the same, and
with at least two inner gripping jaws (9, 11; 42, 44, 46; 71, 73), which together are approximately of the length of a complete ring and each of which has a cylindrical outer circumferential surface (13, 48, 76, 79) and a cylindrical inner circumferential surface (23, 77, 81), wherein
(i) the outer circumferential surface (13, 48, 76, 79) has a radius of curvature which is equal to the radius of curvature of the inner circumferential surface (34, 57, 87, 88) of an associated outer gripping jaw (7, 8; 41, 43, 45; 72, 74),
(ii) the inner circumferential surface (23) has a radius of curvature which is equal to the radius of curvature of the cylindrical outer circumferential surface (4) of the inner component (1),
(iii) the axis of curvature (18) of the inner circumferential surface (23) of each inner gripping jaw (9, 11; 42, 44, 46; 71, 73) is staggered with respect to the axis of curvature (14) of the outer circumferential surface (13, 48, 76, 79), and
(iv) the stagger (e) of the axes of curvature (14, 18) of the inner gripping jaws (9, 11; 42, 44, 46; 71, 73) is equal to the stagger (e) of the axes of curvature of the outer gripping jaws (7, 8; 41, 43, 45; 72, 74),
**characterised in**
**that** the gripping jaws (7, 8; 9, 11) are connected together via separable means to form a ring consisting of gripping jaws which can easily be handled and which corresponds in its three-dimensional form to the position of the gripping jaws following fitting.

2. Clamping arrangement (3) for connecting a cylindrical outer circumferential surface (4) of an inner component (1) to an inner circumferential surface (6) of an outer component (2),
with at least two gripping jaws (7, 8; 9, 11), which together are approximately of the length of a complete ring and each of which has an outer circumferential surface (13, 26) and an inner circumferential surface (17, 31), wherein
(i) the outer circumferential surface (13, 26) has a radius of curvature,
(ii) the inner circumferential surface (23, 34) has a radius of curvature which is equal to the radius of curvature of the outer circumferential surface (4) of the inner component (1),
(iii) the axis of curvature (18) of the inner circumferential surface (23, 34) of each gripping jaw (7, 8; 9, 11) is staggered with respect to the axis of curvature (14) of the outer circumferential surface (13, 26), and
with at least two inner gripping jaws (34), which are formed at the inner circumferential surface of the outer component (2), wherein
(i) each gripping surface (34) has a radius of curvature which is equal to the radius of curvature of the outer circumferential surface (13, 26) of the associated gripping jaw (7, 8; 9, 11),
(ii) the axis of curvature (18) of each gripping surface (34) is staggered with respect to the axis of curvature (14) of the other gripping surface (34), and
(iii) the stagger (e) of the axes of curvature (14, 18) of the gripping surfaces (34) is equal to the stagger (e) of the axes of curvature of the gripping jaws (7, 8; 9, 11),
**characterised in that** the outer (13, 26) and inner circumferential surfaces (17, 71) are cylindrical, and that the gripping jaws (7, 8; 9, 11) are connected together via separable means to form a ring consisting of gripping jaws which can easily be handled and which corresponds in its three-dimensional form to the position of the gripping jaws following fitting.

3. Clamping arrangement (3) for connecting an outer circumferential surface (4) of an inner component (1) to a cylindrical inner circumferential surface (6) of an outer component (2),
with at least two gripping jaws (7, 8; 9, 11), which together are approximately of the length of a complete ring and each of which has a cylindrical outer circumferential surface (13, 26) and a cylindrical inner circumferential surface (23, 24), wherein
(i) the outer circumferential surface (13, 26) has a radius of curvature which is equal to the radius of curvature of the cylindrical inner circumferential surface (4) of the outer component (1),
(ii) the inner circumferential surface (23, 34) has a radius of curvature,
(iii) the axis of curvature (18) of the inner circumferential surface (23, 34) of each gripping jaw (7, 8; 9, 11) is staggered with respect to the axis of curvature (14) of the outer circumferential surface (13, 26), **characterised in**
**that** at least two outer gripping surfaces are formed at the outer circumferential surface of the inner component (1), wherein
(i) each gripping surface (34) has a radius of curvature which is equal to the radius of curvature of the inner circumferential surface (23, 24) of the associated gripping jaw (7, 8; 9, 11),
(ii) the axis of curvature (18) of each gripping surface is staggered with respect to the axis of curvature (14) of the other gripping surface, and
(iii) the stagger (e) of the axes of curvature (14, 18) of the gripping surfaces is equal to the stagger (e) of the axes of curvature of the gripping jaws (7, 8; 9, 11), and wherein
the gripping jaws (7, 8; 9, 11) are connected together via separable means to form a ring consisting of gripping jaws which can easily be handled and which corresponds in its three-dimensional form to the position of the gripping jaws following fitting.

4. Clamping arrangement according to Claim 1, **characterised in that** just precisely two outer gripping jaws (7, 8; 72, 74) and just precisely two inner gripping jaws (9, 11; 71, 73) are provided.

5. Clamping arrangement according to Claim 2 or 3, **characterised in that** just precisely two gripping jaws (7, 8; 72, 74) are provided, and that the gripping jaws (7, 8; 9, 11) are identical.

6. Clamping arrangement according to Claim 1, **characterised in that** the outer gripping jaws (7, 8; 41, 43, 45) are identical to one another, and that the inner gripping jaws (9, 11; 42, 44, 46) are identical to one another.

7. Clamping arrangement according to Claim 1, **characterised in that** the outer gripping jaws (72, 74) have different radii of curvature at their inner circumferential surface (87, 88), and that the radius of curvature of the outer circumferential surface of the inner gripping jaws (71, 73) is adapted to the radius of curvature of the inner circumferential surface of the respective associated outer gripping jaw (72, 74).

8. Clamping arrangement according to Claim 1, **characterised in that** actuating means (19) are associated with at least one of the outer gripping jaws (7, 8; 41, 43, 45; 72, 74) and at least one of the inner gripping jaws (9, 11; 42, 44, 46; 71, 73) in order to displace the gripping jaws (7, 8; 41, 43, 45; 72, 74; 9, 11; 42, 44, 46; 71, 73) with respect to one another in a direction parallel to the circumferential surfaces.

9. Clamping arrangement according to Claim 2 or 3, **characterised in that** actuating means (19) are associated with at least one of the gripping jaws (7, 8; 41, 43, 45; 72, 74) in order to displace the gripping jaws (7, 8; 41, 43, 45; 72, 74; 9, 11; 42, 44, 46; 71, 73) in a direction parallel to the circumferential surfaces.

10. Clamping arrangement according to Claim 8 or 9, **characterised in that** the actuating means are formed by openings (19).

11. Clamping arrangement according to Claim 1, **characterised in that** the outer gripping jaw (7, 8; 41, 43, 45; 72, 74) extend over a central angle of less than 180°.

12. Clamping arrangement according to Claim 1, **characterised in that** the inner gripping jaw (9, 11; 42, 44, 46; 71, 73) extend over a central angle of less than 180°.

13. Clamping arrangement according to Claim 2 or 3, **characterised in that** each gripping jaw (7, 8; 9, 11; 42, 44, 46; 71, 73) extends over a central angle of less than 180°.

14. Clamping arrangement according to Claim 1, 2 or 3, **characterised in that**, viewed in the circumferential direction, each gripping jaw (7, 8, 9, 11; 71, 72, 73, 74) is delimited by a front end (21, 22; 35, 36), and the front ends (21, 22; 35, 36) at each gripping jaw (7, 8, 9, 11; 71, 72, 73, 74) lie in a common plane.

15. Clamping arrangement according to Claim 14, **characterised in that** the two axes of curvature (14, 18; 27, 32) of each gripping jaw (7, 8, 9, 11; 71, 72, 73, 74) lie in one plane, and that, in the case of each gripping jaw, the front end (21, 22; 33, 34) having the greater dimension lies in this plane or is adjacent to this plane.

16. Clamping arrangement according to Claim 1, 2 or 3, **characterised in that** the magnitude of the stagger (e) in the case of the gripping jaws (7, 8, 9, 11; 71, 72, 73, 74) lies between 1 % and 20 %, related to the radius of curvature of the outer circumferential surface of the gripping jaw or inner gripping jaw (9, 11; 42, 44, 46; 71, 73).

17. Clamping arrangement according to Claim 1, 2 or 3, **characterised in that** the gripping jaws (7, 8; 9, 11) belonging together with regard to the circumferential direction are connected together at their front faces (21, 22, 35, 36) which point in the circumferential direction such that they occupy a position relative to one another as in the fitted state.

18. Clamping arrangement according to Claim 1, 2 or 3, **characterised in that** the gripping jaws (7, 8; 9, 11) are connected together via compressible means (91).

19. Method for producing a clamping arrangement for connecting a cylindrical outer circumferential surface (4) of an inner component (1) to a cylindrical inner circumferential surface (6) of an outer component (2), in which:
at least one first cylindrical member (25, 55, 83, 84) with a cylindrical outer circumferential surface (26, 56, 85, 86) is provided, the diameter of which surface is equal to the diameter of the inner circumferential surface (6) of the outer component (2),
the at least one first cylindrical member (25, 55, 83, 84) is provided with a cylindrical bore (31, 57, 87, 88), the axis (32) of which is staggered with respect to the axis (27) of the cylindrical outer circumferential surface (26, 56, 85, 86 by a determined distance,
the at least one first cylindrical member (25, 55, 83, 84) is divided at least along one plane, which is parallel to a plane which is determined by the two axes (27, 32) of the first cylindrical member (25, 55, 83, 84),
at least one second cylindrical member (12, 47, 75, 78) with a cylindrical outer circumferential surface (13, 48, 76, 79) is provided, the diameter of which surface is equal to the diameter of the bore (31, 57, 87, 88) in the first cylindrical member (25, 55, 83, 84),
the at least one second cylindrical member (12, 47, 75, 78) is provided with a cylindrical bore (17), the diameter of which is equal to the diameter of the outer circumferential surface (4) of the inner component (1) and the axis (18) of which is staggered with respect to the axis (14) of the cylindrical outer circumferential surface (13, 48, 76, 79) by a determined distance, wherein the stagger in the case of the first cylindrical member (25, 55, 83, 84) is equal to the stagger at the second cylindrical member (12, 47, 75, 78), and
the at least one second cylindrical member (12, 47, 75, 78) is divided at least along one plane, which is parallel to a plane which is determined by the two axes (14, 18) of the second cylindrical member (12, 47, 75, 78), wherein the gripping jaws (7, 8; 9, 11) resulting from the division of the cylindrical members (25, 55, 83, 84; 12, 47, 75, 78) are disposed in transposed fashion and are connected together via separable means, thereby producing a ring consisting of gripping jaws which can easily be handled and which corresponds in its three-dimensional form to the position of the gripping jaws following fitting.

20. Method for producing a clamping arrangement for connecting a cylindrical outer circumferential surface (4) of an inner component (1) to an inner circumferential surface (6) of an outer component (2), in which:
at least one cylindrical member (25, 55, 83, 84) with a cylindrical outer circumferential surface (26, 56, 85, 86) is provided,
the at least one cylindrical member (25, 55, 83, 84) is . provided with a cylindrical bore (31, 57, 87, 88), the axis (32) of which is staggered with respect to the axis (27) of the cylindrical outer circumferential surface (26, 56, 85, 86) by a determined distance,
the at least one cylindrical member (25, 55, 83, 84) is divided at least along one plane, which is parallel to a plane which is determined by the two axes (27, 32) of the cylindrical member (25, 55, 83, 84),
the inner circumferential surface of the outer component (2) is provided with at least two gripping surfaces (34), the radius of curvature of which corresponds to the radius of curvature of the cylindrical outer circumferential surface (13, 26) of the cylindrical member (12, 25), wherein the gripping surfaces are oriented such that their axes of curvature are staggered by a determined distance, and the distance is equal to the stagger at the cylindrical member (12, 47, 75, 78), wherein
the gripping jaws (7, 8) resulting from the division of the cylindrical members (25, 55, 83, 84) are disposed in transposed fashion and are connected together via separable means, thereby producing a ring consisting of gripping jaws which can easily be handled and which corresponds in its three-dimensional form to the position of the gripping jaws following fitting.

21. Method for producing a clamping arrangement for connecting an outer circumferential surface (4) of an inner component (1) to a cylindrical inner circumferential surface (6) of an outer component (2), in which:
at least one cylindrical member (25, 55, 83, 84) with a cylindrical outer circumferential surface (26, 56, 85, 86) is provided,
the at least one cylindrical member (25, 55, 83, 84) is provided with a cylindrical bore (31, 57, 87, 88), the axis (32) of which is staggered with respect to the axis (27) of the cylindrical outer circumferential surface (26, 56, 85, 86) by a determined distance,
the at least one cylindrical member (25, 55, 83, 84) is divided at least along one plane, which is parallel to a plane which is determined by the two axes (27, 32) of the cylindrical member (25, 55, 83, 84),
the outer circumferential surface of the inner component (1) is provided with at least two gripping surfaces, the radius of curvature of which corresponds to the radius of curvature of the cylindrical inner circumferential surface of the cylindrical member (25, 55, 83, 84), wherein the gripping surfaces are oriented such that their axes of curvature are staggered by a determined distance, and the distance is equal to the stagger at the cylindrical member (12, 47, 75, 78), wherein
the gripping jaws (7, 8) resulting from the division of the cylindrical members (25, 55, 83, 84) are disposed in transposed fashion and are connected together via separable means, thereby producing a ring consisting of gripping jaws which can easily be handled and which corresponds in its three-dimensional form to the position of the gripping jaws following fitting.

22. Method according to Claim 19, 20 or 21, **characterised in that** the at least one first member (25, 55, 83, 84) is divided into at least three pieces which, measured along their circumference, are of an equal length.

23. Method according to Claim 19, **characterised in that** the at least one second member (12, 47, 75, 78) is divided into at least three pieces which, measured along their circumference, are of an equal length.

24. Method according to Claim 19, 20 or 21, **characterised in that** the magnitude of the stagger lies between 1 % and 20 %, related to the radius of curvature of the outer circumferential surface of the at least one second member (12, 47, 75, 78).

25. Method according to Claim 19, 20 or 21, **characterised in that** at least one of the cylindrical members (25, 55, 83, 84; 12, 47, 75, 78), preferably both, is or are made of metal or of a plastics material.

26. Method according to Claim 19, 20 or 21, **characterised in that** the diameter of the outer circumferential surface (26, 56, 85, 86) of the first cylindrical member (25, 55, 83, 84) is dimensioned such that the first cylindrical member (25, 55, 83, 84) produces a press fit, preferably a sliding fit, in the second component (2).

27. Method according to Claim 19, **characterised in that** the diameter of the inner circumferential surface (17) of the second cylindrical member (12, 47, 75, 78) is dimensioned such that the second cylindrical member (12, 47, 75, 78) produces a press fit, preferably a sliding fit, on the first component (1).

## Revendications

1. Dispositif de serrage (3) pour relier une surface périphérique extérieure (4) d'un élément intérieur (1) à une surface périphérique intérieure (6) d'un élément extérieur (2), au moins la surface périphérique extérieure (4) ou la surface périphérique intérieure (6) étant cylindrique,
avec au moins deux mors de serrage (7, 8 ; 41, 43, 45 ; 72, 74) extérieurs qui, ensemble, ont sensiblement la longueur d'un anneau complet et qui présentent chacun une surface périphérique extérieure (26, 56, 85, 86) et une surface périphérique intérieure (34, 57, 87, 88) cylindrique,
i) la surface périphérique extérieure (26, 56, 85, 86) présentant un rayon de courbure qui est égal au rayon de courbure de la surface périphérique intérieure (6) cylindrique de l'élément extérieur (2),
ii) le rayon de courbure de la surface périphérique intérieure (34, 57, 87, 88) étant inférieur au rayon de courbure de la surface périphérique extérieure (26, 56, 85, 86),
iii) sur chaque mors de serrage extérieur (7, 8 ; 41, 43, 45 ; 72, 74), l'axe de courbure (32) de la surface périphérique intérieure (34, 57, 87, 88) étant décalé par rapport à l'axe de courbure (27) de la surface périphérique extérieure (26, 56, 85, 86),
iv) le décalage (e) entre les deux axes de courbure (27, 32) étant égal sur chacun des mors de serrage extérieurs (7, 8 ; 41, 43, 45 ; 72, 74) et
avec au moins deux mors de serrage intérieurs (9, 11 ; 42, 44, 46 ; 71, 73) qui, ensemble, ont sensiblement la longueur d'un anneau complet et qui présentent chacun une surface périphérique extérieure (13, 48, 76, 79) cylindrique et une surface périphérique intérieure (23, 77, 81) cylindrique,
i) la surface périphérique extérieure (13, 48, 76, 79) présentant un rayon de courbure qui est égal au rayon de courbure de la surface périphérique intérieure (34, 57, 87, 88) d'un mors de serrage extérieur (7, 8 ; 41, 43, 45 ; 72, 74) associé,
ii) la surface périphérique intérieure (23) présentant un rayon de courbure qui est égal au rayon de courbure de la surface périphérique extérieure (4) cylindrique de l'élément intérieur (1),
iii) sur chaque mors de serrage intérieur (9, 11 ; 42, 44, 46 ; 71, 73), l'axe de courbure (18) de la surface périphérique intérieure (23) étant décalé par rapport à l'axe de courbure (14) de la surface périphérique extérieure (13, 48, 76, 79), et
iv) le décalage (e) entre les deux axes de courbure (14, 18) sur les mors de serrage intérieurs (9, 11 ; 42, 44, 46 ; 71, 73) étant égal au décalage (e) des axes de courbure sur les mors de serrage extérieurs (7, 8 ; 41, 43, 45 ; 72, 74),
**caractérisé en ce que**
les mors de serrage (7, 8 ; 9, 11) sont liés entre eux par des moyens séparables pour former un anneau de mors de serrage facile à manier qui, dans sa configuration spatiale, correspond à la situation des mors de serrage après leur mise en place.

2. Dispositif de serrage (3) pour relier une surface périphérique extérieure (4) d'un élément intérieur (1) à une surface périphérique intérieure (6) d'un élément extérieur (2),
avec au moins deux mors de serrage (7, 8 ; 9, 114) extérieurs qui, ensemble, ont sensiblement la longueur d'un anneau complet et qui présentent chacun une surface périphérique extérieure (13, 26) et une surface périphérique intérieure (17, 31)e,
i) la surface périphérique extérieure (13, 26) présentant un rayon de courbure,
ii) la surface périphérique intérieure (23, 34) présentant un rayon de courbure qui est égal au rayon de courbure de la surface périphérique extérieure (4) de l'élément intérieur (1),
iii) sur chaque mors de serrage (7, 8 ; 9, 11) l'axe de courbure (18) de la surface périphérique intérieure (23, 34) étant décalé par rapport à l'axe de courbure (14) de la surface périphérique extérieure (13, 26) et
avec au moins deux surfaces de serrage intérieures (34) qui sont aménagées sur la surface périphérique intérieure de l'élément extérieur (2),
i) chaque surface de serrage (34) présentant un rayon de courbure qui est égal au rayon de courbure de la surface périphérique extérieure (13, 26) du mors de serrage (7, 8 ; 9, 11) associé,
ii) sur chaque surface de serrage (34), l'axe de courbure (18) étant décalé par rapport à l'axe de courbure (14) de l'autre surface de serrage (34), et
v) le décalage (e) entre les deux axes de courbure (14, 18) sur les surfaces de serrage (34) étant égal au décalage (e) des axes de courbure sur les mors de serrage (7, 8 ; 9, 11),
**caractérisé en ce que**
les surfaces périphériques extérieures (13, 26) et intérieures (17, 31) sont cylindriques et **en ce que** les mors de serrage (7, 8 ; 9, 11) sont liés entre eux par des moyens séparables pour former un anneau de mors de serrage facile à manier qui, dans sa configuration spatiale, correspond à la situation des mors de serrage après leur mise en place.

3. Dispositif de serrage (3) pour relier une surface périphérique extérieure (4) d'un élément intérieur (1) à une surface périphérique intérieure (6) d'un élément extérieur (2),
avec au moins deux mors de serrage (7, 8 ; 9, 11) extérieurs qui, ensemble, ont sensiblement la longueur d'un anneau complet et qui présentent chacun une surface périphérique extérieure (13, 26) cylindrique et une surface périphérique intérieure (23, 34) cylindrique,
i) la surface périphérique extérieure (13, 26) présentant un rayon de courbure qui est égal au rayon de courbure de la surface périphérique intérieure (4) cylindrique de l'élément extérieur (1),
ii) la surface périphérique intérieure (23, 34) présentant un rayon de courbure,
iii) sur chaque mors de serrage extérieur (7, 8 ; 9, 11) l'axe de courbure (18) de la surface périphérique intérieure (23, 34) étant décalé par rapport à l'axe de courbure (14) de la surface périphérique extérieure (13, 26),
**caractérisé en ce que**
au moins deux surfaces de serrage extérieures sont formées sur la surface périphérique extérieure de l'élément intérieur (1),
i) chaque surface de serrage présentant un rayon de courbure qui est égal au rayon de courbure de la surface périphérique intérieure (23, 34) du mors de serrage (7, 8 ; 9, 11) associé,
ii) sur chaque surface de serrage, l'axe de courbure (18) étant décalé par rapport à l'axe de courbure (14) de l'autre surface de serrage et
iii) le décalage (e) entre les deux axes de courbure (14, 18) sur les surfaces de serrage étant égal au décalage (e) des axes de courbure sur les mors de serrage (7, 8 ; 9, 11),
**en ce que** les mors de serrage (7, 8 ; 9, 11) sont reliés entre eux par des moyens séparables pour former un anneau de mors de serrage facile à manier qui, dans sa configuration spatiale, correspond à la situation des mors de serrage après leur mise en place.

4. Dispositif de serrage selon la revendication 1, **caractérisé en ce qu'**il est prévu seulement exactement deux mors de serrage extérieurs (7, 8 ; 72, 74) et seulement exactement deux mors de serrage intérieurs (9, 11 ; 71, 73).

5. Dispositif de serrage selon la revendication 2 ou 3, **caractérisé en ce qu'**il est prévu seulement exactement deux mors de serrage (7, 8 ; 72, 74) et **en ce que** les mors de serrage (7, 8 ; 9, 11) sont identiques.

6. Dispositif de serrage selon la revendication 1, **caractérisé en ce que** les deux mors de serrage extérieurs (7, 8 ; 41, 43, 45) sont identiques entre eux et **en ce que** les mors de serrage intérieurs (9, 11 ; 42, 44, 46) sont identiques entre eux.

7. Dispositif de serrage selon la revendication 1, **caractérisé en ce que** les mors de serrage extérieurs (72, 74) présentent des rayons de courbure différents au niveau de leur surface périphérique intérieure (87, 88) et **en ce que** le rayon de courbure de la surface périphérique extérieure des mors de serrage intérieurs (72, 73) est adapté au rayon de courbure de la surface périphérique intérieure du mors de serrage extérieur (72, 74) associé.

8. Dispositif de serrage selon la revendication 1, **caractérisé en ce qu'**à au moins un des mors de serrage extérieurs (7, 8 ; 41, 43, 45 ; 72, 74) et à au moins un des mors de serrage intérieurs (9, 11 ; 42, 44, 46 ; 71, 73) sont associés des moyens d'actionnement (19) pour déplacer les mors de serrage (7, 8 ; 41, 43, 45 ; 72, 74 ; 9, 11 ; 42, 44, 46 ; 71, 73) en direction l'un de l'autre, parallèlement aux surfaces périphériques.

9. Dispositif de serrage selon la revendication 2 ou 3, **caractérisé en ce qu'**à au moins un des mors de serrage (7, 8 ; 41, 43, 45 ; 72, 74) sont associés des moyens d'actionnement (19) pour déplacer les mors de serrage (7, 8 ; 41, 43, 45 ; 72, 74 ; 9, 11 ; 42, 44, 46 ; 71, 73) dans la direction parallèle aux surfaces périphériques.

10. Dispositif de serrage selon la revendication 8 ou 9, **caractérisé en ce que** les moyens d'actionnement sont formés par des ouvertures (19).

11. Dispositif de serrage selon la revendication 1, **caractérisé en ce que** le mors de serrage extérieur (7, 8 ; 41, 43, 45 ; 72, 74) s'étend sur un angle au centre inférieur à 180°.

12. Dispositif de serrage selon la revendication 1, **caractérisé en ce que** le mors de serrage intérieur (9, 11 ; 42, 44, 46 ; 71, 73) s'étend sur un angle au centre inférieur à 180°.

13. Dispositif de serrage selon la revendication 2 ou 3, **caractérisé en ce que** chaque mors de serrage (7, 8 ; 9; 11 ; 42, 44, 46 ; 71, 73) s'étend sur un angle au centre inférieur à 180°.

14. Dispositif de serrage selon la revendication 1, 2 ou 3, **caractérisé en ce que** chaque mors de serrage (7, 8 ; 9; 11 ; 71, 72, 73, 74) vu dans la direction périphérique, est délimité par une extrémité frontale (21, 22 ; 35, 36) et **en ce que** les extrémités frontales (21, 22 ; 35, 36), sur chaque mors de serrage (7, 8 ; 9; 11 ; 71, 72, 73, 74) sont situées dans un plan commun.

15. Dispositif de serrage selon la revendication 14, **caractérisé en ce que** sur chaque mors de serrage (7, 8 ; 9; 11 ; 71, 72, 73, 74) les deux axes de courbure (14, 18 ; 27, 32) sont situés dans un plan et **en ce que** sur chaque mors de serrage l'extrémité frontale (21, 22 ; 33, 34) de plus grande dimension est disposée dans ce plan ou est voisine de ce plan.

16. Dispositif de serrage selon la revendication 1, 2 ou 3, **caractérisé en ce que** la valeur du décalage (e) sur les mors de serrage (7, 8, 9, 11 ; 71, 72, 73, 74) est comprise entre 1% et 20% rapporté au rayon de courbure de la surface périphérique extérieure des mors de serrage ou des mors de serrage intérieurs (7, 8, 9, 11 ; 71, 72, 73, 74)

17. Dispositif de serrage selon la revendication 1, 2 ou 3, **caractérisé en ce que** les mors de serrage (7, 8 ; 9, 11) associés dans la direction périphérique sont liés entre eux au niveau de leurs surfaces frontales (21, 22, 35, 36) tournées l'une vers l'autre afin qu'ils prennent l'un par rapport à l'autre, une position semblable à celle de la position montée.

18. Dispositif de serrage selon la revendication 1, 2 ou 3, **caractérisé en ce que** les mors de serrage (7, 8 ; 9, 11) sont liés entre eux par des moyens (91) compressibles.

19. Procédé de fabrication d'un dispositif de serrage pour relier une surface périphérique extérieure (4) cylindrique d'un élément intérieur (1) à une surface périphérique intérieure (6) d'un élément extérieur (2), selon lequel
il est prévu au moins un premier organe (25, 55 83, 84) cylindrique avec une surface périphérique extérieure (26, 56, 85, 86) cylindrique dont le diamètre est égal au diamètre de la surface périphérique intérieure (6) de l'élément extérieur (2),
le premier organe (25, 55 83, 84) cylindrique, au nombre d'au moins un, est muni d'un alésage cylindrique (31, 57, 87, 88), dont l'axe (32) est décalé d'une distance prédéterminée par rapport à l'axe (27) de la surface périphérique extérieure (26, 56, 85, 86),
le premier organe (25, 55 83, 84) cylindrique, au nombre d'au moins un, est divisé au moins suivant un plan qui est parallèle à un plan défini par les deux axes (27, 32) du premier organe (25, 55 83, 84) cylindrique,
il est prévu au moins un deuxième organe (12, 47, 75, 78) cylindrique avec une surface périphérique extérieure (13, 48, 76, 79) cylindrique dont le diamètre est égal au diamètre de l'alésage (31, 57, 87, 88) dans le premier organe (25, 55 83, 84) cylindrique,
le deuxième organe (12, 47, 75, 78) cylindrique, au nombre d'au moins un, est muni d'un alésage cylindrique (17), dont le diamètre est égal au diamètre de la surface périphérique extérieure (4) de l'élément intérieur (1) et dont l'axe (18) est décalé d'une distance prédéterminée par rapport à l'axe (14) de la surface périphérique extérieure (13, 48, 76, 79), le décalage sur le premier organe (25, 55 83, 84) cylindrique étant identique au décalage sur le deuxième organe (12, 47, 75, 78) cylindrique,
le deuxième organe (12, 47, 75, 78) cylindrique, au nombre d'au moins un, est divisé au moins suivant un plan qui est parallèle à un plan défini par les deux axes (14, 18) du deuxième organe (12, 47, 75, 78) cylindrique, les mors de serrage (7, 8) obtenus par la division des organes cylindriques (25, 55, 83, 84) étant disposés dans des positions mutuellement opposées et étant liés l'un à l'autre par des moyens séparables, un anneau de mors de serrage facile à manier dont l'agencement dans l'espace correspond à la position des mors de serrage après montage étant ainsi formé.

20. Procédé de fabrication d'un dispositif de serrage pour relier une surface périphérique extérieure (4) cylindrique d'un élément intérieur (1) à une surface périphérique intérieure (6) d'un élément extérieur (2), selon lequel
il est prévu au moins un premier organe (25, 55 83, 84) cylindrique avec une surface périphérique extérieure (26, 56, 85, 86) cylindrique,
le premier organe (25, 55 83, 84) cylindrique, au nombre d'au moins un, est muni d'un alésage cylindrique (31, 57, 87, 88), dont l'axe (32) est décalé d'une distance prédéterminée par rapport à l'axe (27) de la surface périphérique extérieure (26, 56, 85, 86) cylindrique,
le premier organe (25, 55 83, 84) cylindrique, au nombre d'au moins un, est divisé au moins suivant un plan qui est parallèle à un plan défini par les deux axes (27, 32) de l'organe (25, 55 83, 84) cylindrique,
la surface périphérique intérieure de l'élément extérieur (2) est pourvue d'au moins deux surfaces de serrage (34), dont le rayon de courbure correspond au rayon de courbure de la surface périphérique extérieure (13 26) de l'organe cylindrique (12, 25), les surfaces de serrage étant conformées de manière telle que leurs axes de courbure soient mutuellement décalés d'une distance prédéterminée et que la distance soit égale au décalage sur l'organe cylindrique (12, 47, 75, 78), les mors de serrage (7, 8) obtenus par la division des organes cylindriques (25, 55, 83, 84) étant disposés dans des positions mutuellement opposées et étant liés l'un à l'autre par des moyens séparables, un anneau de mors de serrage facile à manier dont l'agencement dans l'espace correspond à la position des mors de serrage après montage étant ainsi formé.

21. Procédé de fabrication d'un dispositif de serrage pour relier une surface périphérique extérieure (4) cylindrique d'un élément (1) intérieur à une surface périphérique intérieure (6) d'un élément (2) extérieur, selon lequel
il est prévu au moins un organe (25, 55 83, 84) cylindrique avec une surface périphérique extérieure (26, 56, 85, 86) cylindrique,
l'organe (25, 55 83, 84) cylindrique, au nombre d'au moins un, est muni d'un alésage cylindrique (31, 57, 87, 88), dont l'axe (32) est décalé d'une distance prédéterminée par rapport à l'axe (27) de la surface périphérique extérieure (26, 56, 85, 86) cylindrique,
l'organe (25, 55 83, 84) cylindrique, au nombre d'au moins un, est divisé au moins suivant un plan qui est parallèle à un plan défini par les deux axes (27, 32) de l'organe (25, 55 83, 84) cylindrique,
la surface périphérique extérieure de l'élément intérieur (1) est pourvue d'au moins deux surfaces de serrage, dont le rayon de courbure correspond au rayon de courbure de la surface périphérique intérieure de l'organe cylindrique (25, 55 83, 84), les surfaces de serrage étant conformées de manière telle que leurs axes de courbure soient mutuellement décalés d'une distance prédéterminée et que la distance soit égale au décalage sur l'organe cylindrique (12, 47, 75, 78), les mors de serrage (7, 8) obtenus par la division des organes cylindriques (25, 55, 83, 84) étant disposés dans des positions mutuellement opposées et étant liés l'un à l'autre par des moyens séparables, un anneau de mors de serrage facile à manier dont l'agencement dans l'espace correspond à la position des mors de serrage après montage étant ainsi formé.

22. Procédé selon la revendication 19, 20 ou 21, **caractérisé en ce que** le premier organe (25, 55, 83, 84) au nombre d'au moins un est divisé en au moins trois parties qui, mesurées au niveau de leur circonférence, ont la même longueur.

23. Procédé selon la revendication 19, **caractérisé en ce que** le deuxième organe (12, 47, 75, 75, 78) au nombre d'au moins un est divisé en au moins trois parties qui, mesurées au niveau de leur circonférence, ont la même longueur.

24. Procédé selon la revendication 19, 20 ou 21, **caractérisé en ce que** la valeur du décalage est comprise entre 1% et 20% rapporté au rayon de courbure de la surface périphérique extérieure du deuxième organe (12, 47, 75, 75, 78), au nombre d'au moins un.

25. Procédé selon la revendication 19, 20 ou 21, **caractérisé en ce qu'**au moins un des organes (25, 55, 83, 84 ; 12, 47, 75, 75, 78), de préférence les deux organes, est/sont réalisé/s en métal ou en matière plastique.

26. Procédé selon la revendication 19, 20 ou 21, **caractérisé en ce que** le diamètre de la surface périphérique extérieure (26, 56, 85, 86) du premier organe (25, 55, 83, 84) cylindrique est dimensionnée de telle sorte que le premier organe (25, 55, 83, 84) cylindrique forme un assemblage serré, de préférence un assemblage coulissant avec le deuxième organe (12, 47, 75, 75, 78) cylindrique.

27. Procédé selon la revendication 19, **caractérisé en ce que** le diamètre de la surface périphérique intérieure (17) du deuxième organe (12, 47, 75, 75, 78) cylindrique est dimensionnée de telle sorte que le deuxième organe (12, 47, 75, 75, 78) cylindrique forme un assemblage serré, de préférence un assemblage coulissant avec le premier élément (1).
